# EUROPEAN PATENT APPLICATION

(11) **EP 3 462 768 A1**
(43) Date of publication of application: **03.04.2019**
(21) Application number: 17306300.9
(22) Date of filing: 29.09.2017
(51) Int. Cl.: H04W 24/08

(54) **A METHOD FOR MEASURING AN AIRTIME USAGE OF A WIRELESS MEDIUM**

(71) Applicant: Thomson Licensing, 92130 Issy-les-Moulineaux (FR)
(72) Inventor: GYSELINCK, Luc, 2650 Edegem (BE); LETOR, Nicolas, 2650 Edegem (BE); VAN OOST, Koen, 2650 Edegem (BE)
(74) Representative: Vidon Brevets & Stratégie

(57) **Abstract**

The invention concerns a method for measuring the airtime usage of a wireless medium. WiFi airtime measurement is based on data frames effectively transmitted through the monitored wireless medium and captured by a wireless device using the wireless medium for transmitting its data frames. The current solutions used to measure the airtime usage of a wireless medium may provide a wrong interpretation of the actual availability of the wireless. The invention provides an accurate airtime usage metrics since it computes the airtime usage metrics based on parameters representing actual transmission condition of the wireless medium.

## Description

### TECHNICAL FIELD

The present invention relates to wireless data transmission and more particularly to a method for determining an airtime usage of a wireless medium between a plurality of wireless devices.

### BACKGROUND

For several purposes, the airtime usage of a wireless medium used, for example, by Wi-Fi transmitters, such as access points and stations is an important knowledge of an operator managing wireless local area networks (WLAN). For example, current airtime usage of a wireless medium is used for checking and/or enforcing airtime fairness. Another use of airtime usage is Wi-Fi monitoring and analytics.

WiFi airtime measurement is based on data frames effectively transmitted through the monitored wireless medium and captured by a wireless device using the wireless medium for transmitting its data frames. When a fraction of airtime of the wireless medium is not available for transmission because of constraints specified in Wi-Fi protocols such as IEEE 802.11, this fraction may not be taken correctly into account in the assertion of the availability of the wireless medium. Consequently, these time periods may be interpreted badly as time during which the wireless medium is available for transmission. This may result in a wrong interpretation of the actual availability of the wireless medium which impacts the Quality of Service of the WLANs as well as the Quality of Experience of users of wireless devices.

The present invention has been devised with the foregoing in mind.

### SUMMARY OF INVENTION

According to a first aspect of the invention there is provided a computer-implemented method for measuring an airtime usage of a wireless medium by a plurality of wireless devices for transmitting data frames, the method comprising:
- determining airtime usage metrics for the wireless medium based on at least:
- parameters representative of radio performance of said wireless medium, and the following parameters retrieved in at least one data frame transmitted through said wireless medium:
   ✔ parameters representative of at least one interframe space of said data frame,
   ✔ at least one parameter identifying a source or a destination of said data frame.

Such a method provides an accurate airtime usage metrics since it is computed based on parameters representing actual transmission condition of the wireless medium.

According to an embodiment of the invention, the parameters representative of the interframe space are a type of aggregation and a depth of the aggregation applied to the data frames transmitted through the wireless medium.

The aggregation has an impact on the airtime usage, since when an aggregation is applied, more data frames are sent during a same transmit opportunity.

According to an embodiment of the invention, prior to determining the airtime usage the method comprises:
- retrieving parameters representative of radio capabilities of devices using the wireless medium for transmitting data frames.

According to an embodiment of the invention, prior to determining the airtime usage the method comprises:
- retrieving parameters representative of the wireless medium.

According to an embodiment of the invention, the data frames are classified depending on the type of data comprised in said data frames.

According to an embodiment of the invention, when the wireless medium is shared between a plurality of wireless networks, the invention further comprises determining a wireless network from which or to which a data frame is transmitted.

Another object of the invention concerns a device capable of measuring an airtime usage of a wireless medium by a plurality of wireless devices for transmitting data frames, said device comprising at least one hardware processor configured to:
- Determine airtime usage metrics for the wireless medium based on at least:
- parameters representative of radio performance of said wireless medium, and the following parameters retrieved in at least one data frame transmitted through said wireless medium:
   - parameters representative of at least one interframe space of said data frame, at least one parameter identifying a source or a destination of said data frame.

Such a device is for example an access point or a station such as a set top box, a smartphone, a repeater, etc.

According to an embodiment of the invention, the parameters representative of the interframe space are a type of aggregation and a depth of the aggregation applied to the data frames transmitted through the wireless medium.

According to an embodiment of the invention, prior to determining the airtime usage the hardware processor is configured to:
- retrieve parameters representative of radio capabilities of devices using the wireless medium for transmitting data frames.

According to an embodiment of the invention, prior to determining the airtime usage the hardware processor is further configured to:
r etrieve parameters representative of the wireless medium.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** is a schematic block diagram illustrating an example of a device capable of executing the method according to an embodiment of the invention, **Figure 2** represents a flowchart of a method for determining an airtime usage of a wireless medium used by a plurality of a wireless devices for transmitting data frames according to an embodiment of the invention,
**Figure 3** is a schematic block diagram illustrating an example of a device capable of executing the method according to an embodiment of the invention,
**Figure 4** is a flowchart representing the steps of a method for validating a wireless chipset according to an embodiment of the invention,
**Figure 5** represents airtime footprint,
**Figures 6A** and **6B** represent screenshots of a packet trace in which information collected during the execution of the method according to an embodiment the invention are highlighted.

### DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

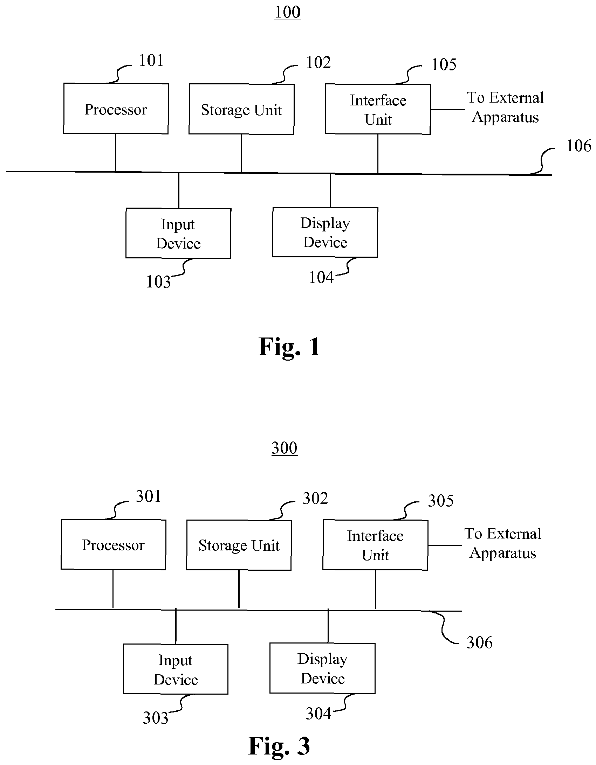

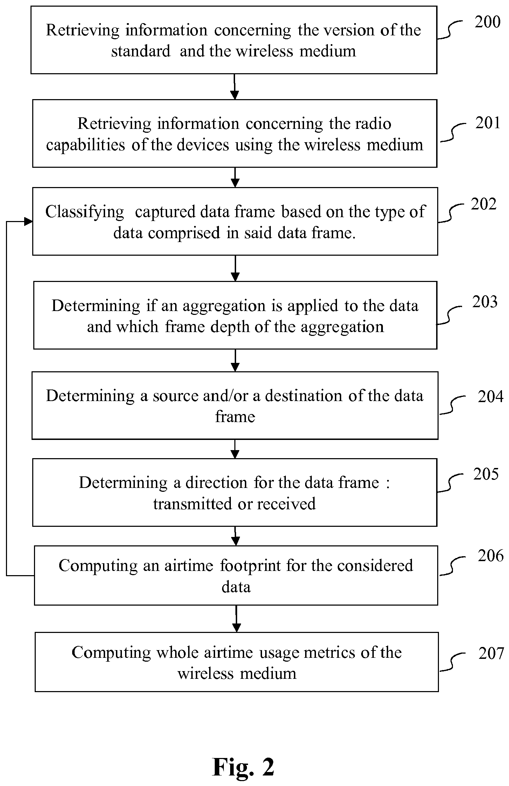

**Figure 1** is a schematic block diagram illustrating an example of a device capable of executing the method according to an embodiment of the invention described in reference to figure 2.

The apparatus 100 comprises a processor 101, a storage unit 102, an input device 103, a display device 104, and an interface unit 105 which are connected by a bus 106. Of course, constituent elements of the computer apparatus 100 may be connected by a connection other than a bus connection.

The processor 101 controls operations of the apparatus 100. The storage unit 102 stores at least one program to be executed by the processor 101, and various data, parameters used by computations performed by the processor 101, intermediate data of computations performed by the processor 101, and so on. The processor 101 may be formed by any known and suitable hardware, or software, or a combination of hardware and software. For example, the processor 101 may be formed by dedicated hardware such as a processing circuit, or by a programmable processing unit such as a CPU (Central Processing Unit) that executes a program stored in a memory thereof.

The storage unit 102 may be formed by any suitable storage or means capable of storing the program, data, or the like in a computer-readable manner. Examples of the storage unit 102 include non-transitory computer-readable storage media such as semiconductor memory devices, and magnetic, optical, or magneto-optical recording media loaded into a read and write unit. The program causes the processor 101 to perform a process for measuring an airtime usage of a wireless medium as described with reference to figure 2.

The input device 103 may be formed by a keyboard, a pointing device such as a mouse, or the like for use by the user to input commands, etc. The output device 104 may be formed by a display device to display, for example, a Graphical User Interface (GUI). The input device 103 and the output device 104 may be formed integrally by a touchscreen panel, for example.

The interface unit 105 provides an interface between the apparatus 100 and an external apparatus. The interface unit 105 may be communicable with the external apparatus via cable or wireless communication.

**Figure 2** represents a flowchart of a method for determining an airtime usage of a wireless medium used by a plurality of a wireless devices for transmitting data frames according to an embodiment of the invention. Once the airtime usage is measured it can be used to validate chipsets as will explained further in the document. The method is executed by any station or any access point using the wireless medium.

In a step 200, the processor 101 of the device 100 retrieves information concerning the version of the standard used for transmitting data frames between a plurality of devices, e.g. 802.11n or 802.11ac, etc. Such information are for example information about interframe spaces DIFS (DCF InterFrame Space), SISF (Short InterFrame Space), etc. The device 100 also retrieves information concerning a frequency band, e.g. 2,4 GHz or 5GHz of the wireless medium.

Besides the interframe space, there is a duration needed by the PLCP (Physical Layer Convergence Procedure), for transmitting the physical layer overhead comprising training symbols (PLCP preamble) and the PLCP header.

This PLCP-related duration also depends on the 802.11 standard used by the wireless medium.

In step 200, the processor also retrieves information about the wireless medium. For example, the wireless medium is congested, a back-off timer needs to be taken into account. The duration of the for back-off timer and of the interframe space is then allocated to the time needed for transmitting/receiving the next data frame.

Besides the interframe space, there is a duration for the PLCP (Physical Layer Convergence Procedure), for transmitting the physical layer overhead comprising training symbols (PLCP preamble) and the PLCP header.

This PLCP-related duration also depends on the 802.11 standard used by the wireless medium.

Furthermore, there is a duration for transmitting information related to the MAC part of the data frame at a corresponding physical rate. Management and control frames are sent at a low rate e.g. 1 Mbps for 2.4 GHz Wi-Fi systems, or 6 Mbps for 5 GHz WiFi systems. Data frames are transmitted through the wireless medium at the highest possible rate by taking into account the transmission conditions of the wireless medium and the transmitter's rate control logic.

In a step 201, the processor 101 of the device 100 retrieves information concerning the radio capabilities of the plurality of devices using the wireless medium for transmitting data frames. Such information are for example the number of antennas embedded in a device, the nature, e.g. MIMO (Multiple Input Multiple Output) or not, of these antennas, the modulation used by the devices, the number of radio streams that the device is capable of managing etc. In this step, the processor 101 retrieves information concerning the stations as well as the access points.

The following steps 202 to 206 are then executed for each data frame captured by the device executing the method according to an embodiment of the invention during a given monitoring interval, e.g every second or tens of seconds or every minutes, etc.

In a step 202, the processor 101 classifies a captured data frame based on the type of data comprised in said data frame. For example the data frames are classified in the following categories: management frames, control frames, actual data frames. In an embodiment of the invention, the captured data frames may be classified with more precision between RTS (Request To Send) frames, CTS (Clear To Send) frames, beacon frames, etc.

Classifying the data frames enables to increase the accuracy of the measurement of the airtime usage of the wireless medium.

In a step 203, the processor 101 determines if an aggregation is applied to the data frame and if so, a type and depth of the aggregation. The type of aggregation may be for example AMPDU (Aggregation MAC Protocol Data Unit) or AMSDU (Aggregation MAC Service Unit) and the depth of the aggregation may go from no aggregation to e.g. 10 frames aggregated.

In a step 204, the processor 101 determines a source and/or a destination of the data frame as well as a SSID (Service Set IDentifer) of a WLAN to which the device that has emitted or the device to which the data frame is sent.

In a step 205, based on the information retrieved during step 204, the processor 101 determines a direction for the data frame: transmitted or received, as well as the origin of the data frame, i.e. does the data frame originates from a same WLAN as the one to which the plurality of devices belong or from another WLAN sharing the same wireless medium. Indeed, a same wireless medium can be shared between different WLAN. Thus, frames transmitted between devices belonging to a same WLAN may be intercepted by devices from another WLAN using the same wireless medium. It important to know, within a given WLAN, the fraction of airtime used for transmitting or receiving data frames from another WLAN sharing the same wireless medium.

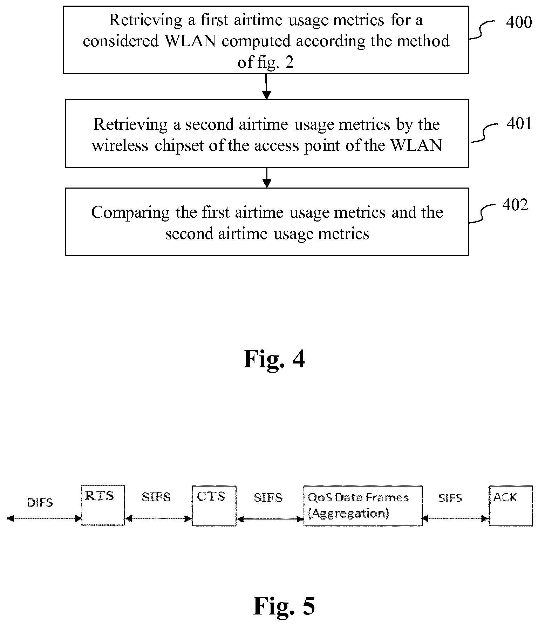

In a step 206, an airtime footprint for the considered data frame is computed based on all the previously collected information. The airtime footprint is the sum of an actual frame duration with a protection frame duration (RTS/CTS), the interframe spaces (DIFS/SIFS) and the medium backoff timer, as represented on **figure 5**. The footprint of the QoS data frame represented on figure 5 is equal to the time consumed by the interframe spaces and the RTS/CTS frames, if present, as well as the ACK block. It is to be noted that the medium backoff timer is not represented on figure 5 as it is derived from the context or assumed to be a fixed value.

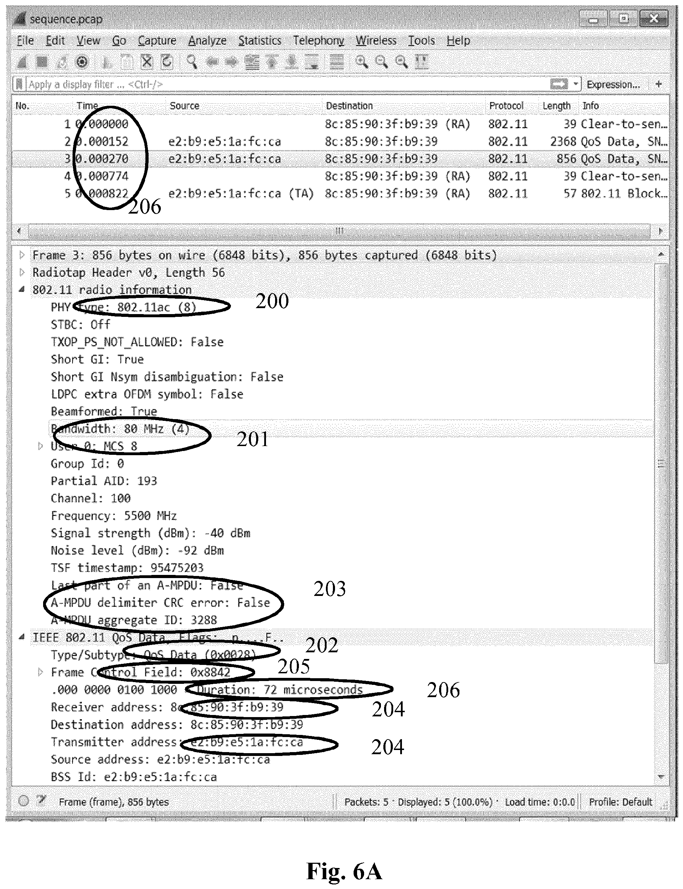

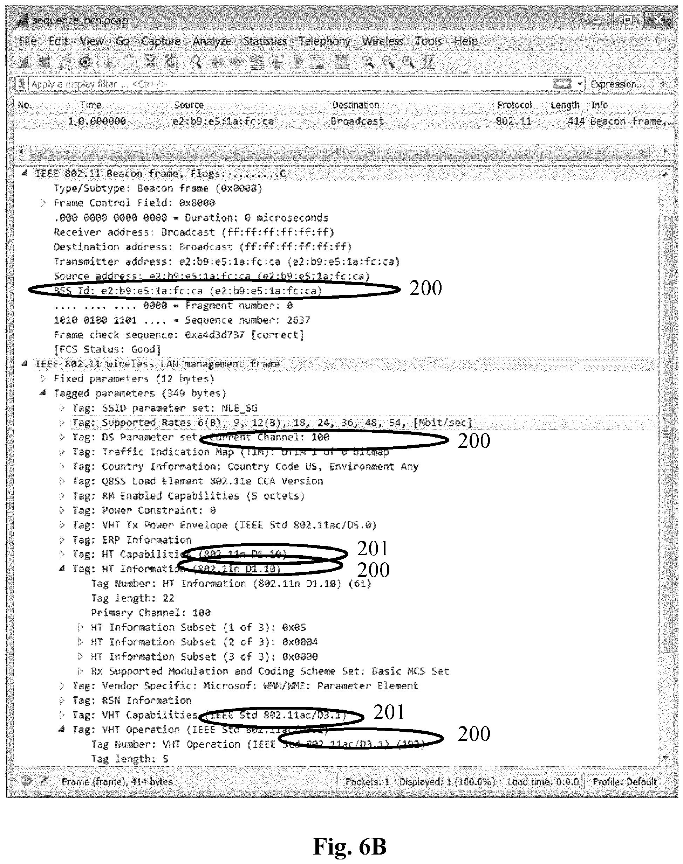

**Figures 6A** and **6B** represent screenshots of a packet trace in which information collected during the execution of the method according to an embodiment the invention are highlighted and linked to the step of the method during which they are collected.

In a step 207, when the processor 101 determines that the monitor interval has expired, the whole airtime usage metrics of the wireless medium is computed.

Taking all the information retrieved or determined during the execution of the method according to an embodiment of the invention, the airtime usage of the wireless medium for a given WLAN may be assigned to:
- a percentage of the time due to transmitted frames,
- a percentage of the time due to received frames in the considered WLAN,
- a percentage of the time due to received frames from another WLAN,
- a percentage of the time the wireless medium is still available.

This airtime usage metrics is accurate since it is computed using parameters representative of the actual transmission condition of the wireless medium. Consequently, such an airtime usage metrics may be used to validate wireless chipsets before they are embedded in a station or an access point.

Figure 3 is a schematic block diagram illustrating an example of a device capable of executing the method according to an embodiment of the invention described in reference to figure 2.

The apparatus 300 comprises a processor 301, a storage unit 302, an input device 303, a display device 304, and an interface unit 305 which are connected by a bus 306. Of course, constituent elements of the computer apparatus 300 may be connected by a connection other than a bus connection.

The processor 301 controls operations of the apparatus 300. The storage unit 302 stores at least one program to be executed by the processor 301, and various data, parameters used by computations performed by the processor 301, intermediate data of computations performed by the processor 301, and so on. The processor 301 may be formed by any known and suitable hardware, or software, or a combination of hardware and software. For example, the processor 301 may be formed by dedicated hardware such as a processing circuit, or by a programmable processing unit such as a CPU (Central Processing Unit) that executes a program stored in a memory thereof.

The storage unit 302 may be formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a process for validating a wireless chipset as described with reference to figure 4.

The input device 303 may be formed by a keyboard, a pointing device such as a mouse, or the like for use by the user to input commands, etc. The output device 304 may be formed by a display device to display, for example, a Graphical User Interface (GUI). The input device 303 and the output device 304 may be formed integrally by a touchscreen panel, for example.

The interface unit 305 provides an interface between the apparatus 300 and an external apparatus. The interface unit 305 may be communicable with the external apparatus via cable or wireless communication.

**Figure 4** is a flowchart representing the steps of a method for validating a wireless chipset according to an embodiment of the invention.

In a step 400, the processor 301 of the device 300 retrieves a first airtime usage metrics for a considered WLAN computed according to the method described in reference to figure 2.

In a step 401, the processor 301 of the device 300 retrieves a second airtime usage metrics. This second airtime usage metrics is provided by the wireless chipset of the access point of the considered WLAN.

In a step 402, the processor 301 compares the first airtime usage metrics and the second airtime usage metrics. If a difference between the first airtime metrics and the second airtime metrices falls within a given range of value, then the second airtime metrics is considered accurate and the chipset is validated.

If the difference between the first airtime metrics and the second airtime metrices falls outside the given range of value, then the second airtime metrics is not considered accurate and the chipset is not validated.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A computer-implemented method for measuring an airtime usage of a wireless medium by a plurality of wireless devices for transmitting data frames, the method comprising:
- determining airtime usage metrics for the wireless medium based on at least:
- parameters representative of radio performance of said wireless medium, and the following parameters retrieved in at least one data frame transmitted through said wireless medium:
✔ parameters representative of at least one interframe space of said data frame,
✔ at least one parameter identifying a source or a destination of said data frame.

2. The method according to claim 1 wherein the parameters representative of the interframe space are a type of aggregation and a depth of the aggregation applied to the data frames transmitted through the wireless medium.

3. The method according to claim 1 wherein prior to determining the airtime usage the method comprises:
- retrieving parameters representative of radio capabilities of devices using the wireless medium for transmitting data frames.

4. The method according to claim 1 wherein prior to determining the airtime usage the method comprises:
- retrieving parameters representative of the wireless medium.

5. The method according to claim 1 wherein the data frames are classified depending on the type of data comprised in said data frames.

6. The method according to claim 1 wherein the wireless medium being shared between a plurality of wireless networks, the method further comprises determining a wireless network from which or to which a data frame is transmitted.

7. A device capable of measuring an airtime usage of a wireless medium by a plurality of wireless devices for transmitting data frames, said device comprising at least one hardware processor configured to:
- Determine airtime usage metrics for the wireless medium based on at least:
- parameters representative of radio performance of said wireless medium, and the following parameters retrieved in at least one data frame transmitted through said wireless medium:
✔ parameters representative of at least one interframe space of said data frame, at least one parameter identifying a source or a destination of said data frame.

8. The device according to claim 7 wherein the parameters representative of the interframe space are a type of aggregation and a depth of the aggregation applied to the data frames transmitted through the wireless medium.

9. The device according to claim 7 wherein prior to determining the airtime usage the hardware processor is configured to:
- retrieve parameters representative of radio capabilities of devices using the wireless medium for transmitting data frames.

10. The device according to claim 7 wherein prior to determining the airtime usage the hardware processor is further configured to:
- retrieve parameters representative of the wireless medium.

11. A computer program **characterized in that** it comprises program code instructions for the implementation of the method according to claim 1 when the program is executed by a processor.

12. A processor readable medium having stored therein instructions for causing a processor to perform the method according to claim 1.

13. Non-transitory storage medium carrying instructions of program code for executing the method according to claim 1, when said program is executed on a computing device.
